# FASCICULE DE BREVET EUROPEEN

(11) **EP 4 466 183 B1**
(45) Date de publication et mention de la délivrance du brevet: **10.09.2025**
(21) Numéro de dépôt: 23706388.8
(22) Date de dépôt: 18.01.2023
(51) Int. Cl.: B64C 11/22, B29D 99/00, B64C 11/26, F01D 5/14, F01D 5/28

(54) **AUBE DE REDRESSEUR DE FLUX SECONDAIRE DE TURBOMACHINE, TURBOMACHINE MUNIE DE CELLE-CI**
TURBOMASCHINEN-SEKUNDÄRSTROM-GLEICHRICHTERSCHAUFEL, TURBOMASCHINE MIT DIESER SCHAUFEL VERSEHEN
TURBOMACHINE SIDESTREAM RECTIFIER BLADE, TURBOMACHINE EQUIPPED THEREWITH

(30) Priorité: 21.01.2022 FR 2200502
(43) Date de publication de la demande: 27.11.2024
(73) Titulaire: SAFRAN AIRCRAFT ENGINES, 75015 Paris (FR)
(72) Inventeur: BAZOT, Olivier, 77550 MOISSY-CRAMAYEL (FR); JOUDON, Vincent, 77550 MOISSY-CRAMAYEL (FR)
(74) Mandataire: Regimbeau
(86) Numéro de dépôt international: PCT/FR2023/050071
(87) Numéro de publication internationale: WO 2023/139332

(56) Documents cités:
- FR-A1- 3 080 322
- FR-A1- 3 106 519
- FR-A1- 3 107 300
- US-A- 6 139 278
- US-A1- 2020 123 905

## Description

L'invention concerne une aube de redresseur de flux secondaire de turbomachine, ainsi qu'une turbomachine munie de celle-ci.

Le domaine de l'invention concerne les turbomachines d'aéronefs, notamment les turboréacteurs ou les turbopropulseurs.

L'augmentation du taux de dilution (ratio entre le débit du flux primaire et du flux secondaire) est la solution privilégiée par les motoristes afin d'améliorer les performances des moteurs de turbomachine aéronautique et de réduire leur consommation spécifique de carburant. Ceci se traduit par une hausse du diamètre des aubages à iso poussée moteur, en particulier la première aube d'entrée (aube de soufflante ou hélice) et les aubes de redresseur associées, lesquelles sont situées en aval de cette première aube d'entrée. Cette augmentation de dimensions est encore plus importante pour les architectures non carénées.

L'accroissement de ces dimensions a cependant l'inconvénient d'entrainer une augmentation de la masse des aubes du redresseur, ce qui est préjudiciable pour la performance du moteur.

Le document FR-A-3 080 322 décrit une aube à structure composite ayant une pièce de blocage dans une cavité de celle-ci.

Le document FR-A-3 106 519 décrit une aube ayant une préforme fibreuse tissée et un élément de raidissement.

Le document FR-A-3 107 300 décrit une pale une pale composite de rotor de turbomachine à peau, dans laquelle se trouve un longeron.

Le document US-A-6,139,278 décrit une aube, ayant deux côtés, entre lesquels se trouvent une partie métallique et des parties en élastomère.

On connaît par le document FR-A-3 063 514 une aube de redresseur de flux secondaire d'une turbomachine carénée, qui comporte un corps de pale en matériau composite constitué d'un renfort fibreux présentant un tissage tridimensionnel et densifié par une matrice. Ce renfort fibreux présente dans une direction longitudinale une première partie prolongée par une deuxième partie d'extrémité, la deuxième partie comprenant deux segments déliés l'un de l'autre à partir de la jonction entre la première et la deuxième partie et jusqu'à une extrémité libre du renfort fibreux. L'aube comporte en outre un élément rapporté présentant une section en forme de pi, l'élément rapporté comportant une partie de plateforme s'étendant perpendiculairement par rapport à la direction longitudinale, et deux brides longitudinales séparées l'une de l'autre par un espace, la partie de plateforme comprenant un logement délimité par une paroi de fond et un rebord, la paroi de fond comprenant une ouverture communiquant avec l'espace entre les deux brides. La première partie du renfort fibreux du corps de pale est enserrée entre les deux brides de l'élément rapporté, les segments de la deuxième partie du renfort fibreux étant pliés de part et d'autre de la première partie contre la paroi de fond du logement de l'élément rapporté. L'aube comporte en outre un insert présent entre les segments de la deuxième partie du renfort fibreux au niveau de la jonction entre lesdits segments. La turbomachine est carénée, par le fait que les aubes de redresseur s'étendent radialement entre une plateforme interne, par laquelle l'aube de redresseur est fixée à un carter interne du turboréacteur, et deux plateformes externes permettant la fixation de l'aube de redresseur à un carter externe du turboréacteur.

L'aube de redresseur connue par le document FR-A-3 063 514 permet certes de limiter l'accroissement de la masse et de fabriquer les aubes en un matériau composite plein en lieu et place de matériaux métalliques, par exemple pour des aubes creuses en titane ou des aubes en aluminium.

Toutefois, compte tenu des plus grandes dimensions des aubes de redresseur sur une architecture non carénée de turbomachine, il est nécessaire d'améliorer cette réduction de la masse.

Or, dans les architectures non carénées, le fait de fixer l'aube de redresseur par une seule de ses extrémités radiales (pied d'aube) à un carter de la turbomachine a pour conséquence de faire transiter l'ensemble des efforts dans la zone du pied, ce qui se traduit par des niveaux élevés de contraintes dans les parties composites de l'aube de redresseur.

Un objectif de l'invention est d'obtenir une aube de redresseur de flux secondaire de turbomachine, ainsi qu'une turbomachine munie de celle-ci, qui résout le problème mentionné ci-dessus, en permettant de réduire les contraintes tout en limitant l'augmentation de la masse.

A cet effet, un premier objet de l'invention est une aube de flux secondaire de turbomachine, comportant une première peau extérieure et une deuxième peau extérieure, qui sont en un premier matériau composite et qui sont raccordées l'une à l'autre,
la première peau extérieure comportant une première partie d'extrémité, la deuxième peau extérieure comportant une deuxième partie d'extrémité distante de la première partie d'extrémité,
la première partie d'extrémité et la deuxième partie d'extrémité étant situées sur le même côté de montage de l'aube, délimitant entre elles une ouverture et s'écartant l'une de l'autre suivant une direction d'épaisseur,
caractérisée en ce que
l'aube comporte en outre :
   une cavité, qui est située suivant la direction d'épaisseur entre la première peau extérieure et la deuxième peau extérieure et qui débouche dans l'ouverture,
   un matériau de remplissage, qui a une première densité et qui est situé dans la cavité et à distance de l'ouverture,
   un renfort, qui a une deuxième densité supérieure à la première densité et qui comporte une première partie de renfort située dans la cavité et contre le matériau de remplissage et une deuxième partie de renfort, laquelle bouche l'ouverture entre la première partie d'extrémité et la deuxième partie d'extrémité,
   la première partie de renfort étant d'une seule pièce avec la deuxième partie de renfort.

La solution proposée ici permet à la fois d'améliorer la tenue mécanique dans la zone de pied (parties d'extrémité du côté de montage) de l'aube de redresseur dans une architecture de turbomachine non carénée, tout en limitant l'augmentation de masse. L'invention permet de raidir le pied de de l'aube de redresseur, ce qui réduit les contraintes tout en limitant l'impact sur la masse.

Les bénéfices d'une telle solution sont les suivants :
- Diminution des contraintes dans les peaux composites aux niveaux des rayons de raccordement ;
- Réduction des déplacements des peaux en zone de pied mais également en tête d'aube ;
- Augmentation de la fréquence du premier mode de résonance.

Les aubes connues ayant une cavité entre deux peaux présentent par ailleurs les problèmes suivants : des contraintes élevées dans les peaux composites ont été observées au niveau du pied d'aube ; de plus, les déplacements des peaux dans cette zone sont trop importants ; cela limite la durée de vie de l'aube, empêche un bon placement fréquentiel de l'aube (en particulier le premier mode de résonance) et génère un risque de flambage des peaux composites. L'invention permet de résoudre ces problèmes posés par les aubes connues ayant une cavité entre deux peaux, en s'affranchissant d'un longeron de masse significativement importante inséré dans la cavité.

L'invention permet de réduire de façon importante les contraintes en pied de l'aube de redresseur au niveau du rayon de raccordement.

Suivant un mode de réalisation de l'invention, la première partie de renfort comporte une surface de contact avec le matériau de remplissage dans la cavité,
la première peau extérieure et la deuxième peau extérieure ayant un bord d'attaque et un bord de fuite, éloignés l'un de l'autre suivant une direction de largeur de l'aube, laquelle est transversale par rapport à la direction d'épaisseur,
le côté de montage de l'aube étant situé sous une ligne de veine aérodynamique suivant une direction de hauteur de l'aube, transversale par rapport à la direction d'épaisseur et par rapport à la direction de largeur,
la ligne de veine aérodynamique formant une limite du flux secondaire de turbomachine sur la première peau extérieure et sur la deuxième peau extérieure,
une première partie amont de la surface de contact, qui est située du côté du bord d'attaque, est située suivant la direction de hauteur au-dessus d'une deuxième partie amont de la ligne de veine aérodynamique, qui est située du côté du bord d'attaque.

Suivant un mode de réalisation de l'invention, une première partie aval de la surface de contact, qui est située du côté du bord de fuite, est située suivant la direction de hauteur au-dessous d'une deuxième partie aval de la ligne de veine aérodynamique, qui est située du côté du bord de fuite.

Suivant un mode de réalisation de l'invention, la première partie amont de la surface de contact est située suivant la direction de hauteur à une hauteur supérieure ou égale à 50 mm et inférieure ou égale à 100 mm au-dessus de l'ouverture.

Suivant un mode de réalisation de l'invention, la première partie amont de la surface de contact est située suivant la direction de hauteur à une hauteur supérieure ou égale à 50 mm et inférieure ou égale à 100 mm au-dessus de la deuxième partie amont de la ligne de veine aérodynamique.

Suivant un mode de réalisation de l'invention, une plaque fait une liaison entre la première partie d'extrémité et la deuxième partie d'extrémité, est fixée sous et contre la première partie d'extrémité et la deuxième partie d'extrémité et est située contre l'ouverture et contre la deuxième partie de renfort.

Suivant un mode de réalisation de l'invention, la deuxième partie de renfort se prolonge en une base de hauteur non nulle sous la première partie d'extrémité, sous la deuxième partie d'extrémité et sous l'ouverture.

Suivant un mode de réalisation de l'invention, une plaque est fixée sous et contre la base.

Suivant un mode de réalisation de l'invention, la plaque est en un matériau composite.

Suivant un mode de réalisation de l'invention, le renfort est en le premier matériau composite.

Suivant un mode de réalisation de l'invention, le renfort est en un deuxième matériau composite non tissé à fibres noyées dans une matrice.

Suivant un mode de réalisation de l'invention, le renfort est en au moins un métal.

Suivant un mode de réalisation de l'invention, le renfort a un module d'Young supérieur ou égal à 5 GPa. Suivant un mode de réalisation de l'invention, le renfort a un module d'Young par exemple de l'ordre de 10 à 20 GPa.

Suivant un mode de réalisation de l'invention, le matériau de remplissage comporte au niveau de la surface de contact une partie saillante, qui rentre dans une partie creuse de la première partie de renfort.

Un deuxième objet de l'invention est une turbomachine aéronautique non carénée, comportant :
un carter,
une soufflante ayant un moyeu de soufflante et des pales périphériques de soufflante, solidaires du moyeu de soufflante,
le moyeu de soufflante ayant une partie aval de moyeu, qui est entourée par une surface intérieure d'une partie amont du carter et qui dépasse de la partie amont du carter,
le moyeu de soufflante étant monté à rotation par rapport à la partie amont du carter autour d'un axe de rotation, dirigé de l'amont vers l'aval,
la turbomachine comportant en outre des aubes de redresseur de flux secondaire telles que décrites ci-dessus, lesquelles sont situées, par leur côté de montage, adjacentes à une paroi extérieure de la partie amont du carter et sont situées en aval par rapport aux pales périphériques de soufflante. Suivant un mode de réalisation de l'invention, les aubes de redresseur peuvent être par exemple à calage variable, tout comme les pales périphériques de soufflante.

L'invention sera mieux comprise à la lecture de la description qui va suivre, donnée uniquement à titre d'exemple non limitatif en référence aux figures ci-dessous des dessins annexés.
[Fig. 1] représente une vue schématique en coupe axiale radiale d'une aube de redresseur de flux secondaire de turbomachine suivant un mode de réalisation de l'invention.
[Fig. 2] représente une vue schématique, et partielle, en coupe transversale radiale d'une aube de redresseur de flux secondaire de turbomachine suivant un mode de réalisation de l'invention, suivant la ligne de coupe A de la figure 1.
[Fig. 3] représente une vue schématique, et partielle, en coupe transversale radiale d'une aube de redresseur de flux secondaire de turbomachine suivant un autre mode de réalisation de l'invention.
[Fig. 4] représente une vue schématique, et partielle, en coupe transversale radiale d'une aube de redresseur de flux secondaire de turbomachine suivant un autre mode de réalisation de l'invention.
[Fig. 5] représente une vue schématique, et partielle, en coupe transversale radiale d'une aube de redresseur de flux secondaire de turbomachine suivant un autre mode de réalisation de l'invention.
[Fig. 6] représente une vue schématique partielle en coupe transversale radiale et en perspective d'une aube de redresseur de flux secondaire de turbomachine suivant le mode de réalisation de l'invention de la figure 2.
[Fig. 7] représente une vue schématique en coupe axiale et radiale d'une aube de redresseur de flux secondaire de turbomachine suivant le mode de réalisation de l'invention de la figure 6.
[Fig. 8] représente une vue schématique en coupe axiale de dessus d'une aube de redresseur de flux secondaire de turbomachine suivant les modes de réalisation de l'invention des figures 1 à 7.
[Fig. 9] représente une vue schématique et partielle en perspective, montrant en niveaux de gris la valeur des contraintes exercées sur un côté de montage d'une aube de redresseur de flux secondaire de turbomachine suivant le mode de réalisation de l'invention de la figure 2.
[Fig. 10] représente une vue schématique en coupe axiale radiale d'un exemple comparatif d'aube de redresseur de flux secondaire de turbomachine, non muni des moyens suivant l'invention.
[Fig. 11] représente une vue schématique et partielle en perspective, montrant en niveaux de gris la valeur des contraintes exercées sur un côté de montage d'une aube de redresseur de flux secondaire de turbomachine suivant l'exemple comparatif de la figure 10.
[Fig. 12] représente une vue schématique en perspective d'un exemple de turbomachine non carénée, comportant des aubes de redresseur suivant l'invention.

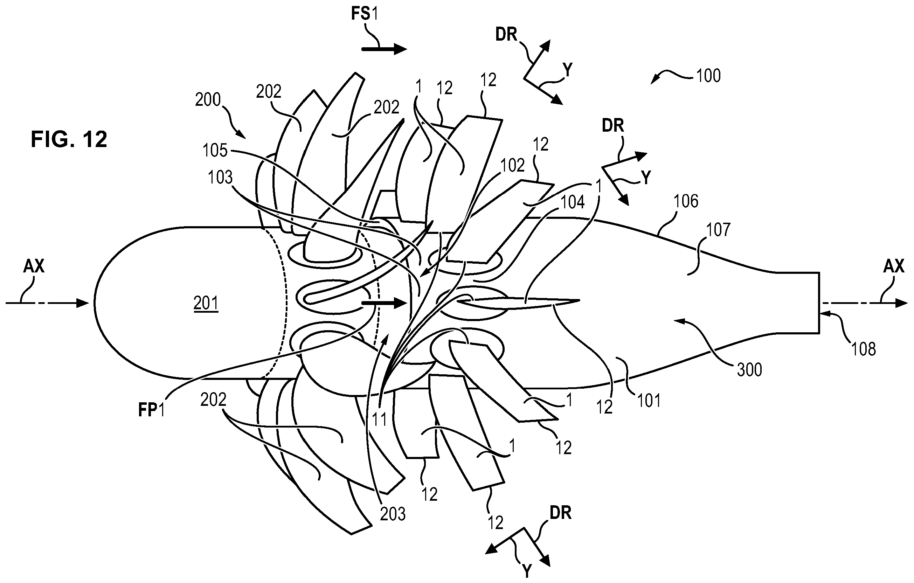

On décrit ci-dessous plus en détail en référence à la figure 12 un exemple de turbomachine 100 sur laquelle peut être utilisée la ou les aubes 1 de redresseur de flux secondaire suivant l'invention.

Ainsi que cela est connu, la turbomachine 100 représentée à la figure 12 est destinée à être installée sur un aéronef non représenté pour le propulser dans les airs, pouvant être par exemple un avion ou un hélicoptère.

L'ensemble moteur à turbine à gaz ou turbomachine 100 est du type non caréné.

L'ensemble moteur à turbine à gaz ou turbomachine 100 s'étend autour d'un axe AX ou direction axiale AX orientée de l'amont vers l'aval. Par la suite, les termes « amont », respectivement « aval » ou « avant », respectivement « arrière », ou « gauche » respectivement « droite » sont pris le long de la direction générale des gaz qui s'écoulent dans la turbomachine selon l'axe AX. La direction allant de l'intérieur vers l'extérieur est la direction radiale DR (ou direction DR de hauteur mentionnée ci-dessous, ou direction DR d'envergure mentionnée ci-dessous) partant de l'axe AX.

La turbomachine 100 comporte un carter 101 portant sur son côté amont une soufflante 200 ayant un moyeu 201 de soufflante et des pales périphériques 202 de soufflante, solidaires du moyeu 201 de soufflante et réparties sur celui-ci autour de l'axe AX de rotation en amont du carter 101. Le moyeu 201 de soufflante a une partie aval 203 de moyeu, qui est entourée par une surface intérieure 102 d'une partie amont 103 du carter 101 et qui dépasse de la partie amont 103 du carter 101. Le moyeu 201 de soufflante est apte à tourner sur lui-même par rapport à la partie amont 103 du carter 101 autour de l'axe AX de rotation. La turbomachine comporte en aval du moyeu 201 de soufflante et dans le carter 101 un ensemble moteur 300 permettant de faire tourner le moyeu 201 de soufflante et donc les pales périphériques 202 de soufflante autour de l'axe AX de rotation.

La turbomachine 100 comporte en outre des aubes 1 de redresseur de flux secondaire, dont le côté 11 de montage est monté de manière mobile ou fixé sur une paroi extérieure 104 de la partie amont 103 du carter 101. Le côté 11 de montage est adjacent à la paroi extérieure 104 de la partie amont 103 du carter 101. Les aubes 1 de redresseur de flux secondaire sont situées en aval par rapport aux pales périphériques 202 de soufflante. Les aubes 1 de redresseur sont donc placées dans le flux secondaire FS1 d'air, qui est créé en aval des pales périphériques 202 de soufflante autour de la paroi extérieure 104 du carter 101, lorsque les pales périphériques 202 de soufflante sont mises en rotation autour de l'axe AX.

La turbomachine 100 aéronautique est non carénée, ce qui signifie que l'aube 1 de redresseur est fixée ou montée uniquement par son côté 11 de montage (ou pied 11 d'aube) sur la paroi extérieure 104 de la partie amont 103 du carter 101. La tête 12 d'aube, qui est située à l'extrémité de l'aube 11 éloignée de son côté 11 de montage suivant la direction DR radiale, est laissée nue dans le flux secondaire d'air, sans être montée, ni fixée à un carter, aucun carter ni nacelle n'entourant les aubes 1 de redresseur et le carter 101.

L'ensemble moteur 300 comporte dans le carter 101, de l'amont vers l'aval dans le sens d'écoulement des gaz, un compresseur basse pression, un compresseur haute pression, une chambre de combustion, une turbine haute pression et une turbine basse pression, qui délimitent un flux primaire de gaz dans le carter 101 à partir d'une entrée 105 d'air, laquelle est située entre la partie amont 103 du carter 101 et le moyeu 201 de soufflante et en aval des pales périphériques 202 de soufflante.

Le compresseur basse pression et le compresseur haute pression peuvent comporter chacun un ou plusieurs étages, chaque étage étant formé par un ensemble d'aubes fixes (ou aubage de stator) et un ensemble d'aubes rotatives (ou aubage de rotor). Les aubes fixes du compresseur basse pression sont fixées au carter 101. Les aubes rotatives du compresseur basse pression sont fixées à un premier arbre rotatif de transmission s'étendant selon l'axe AX. Les aubes fixes du compresseur haute pression sont fixées au carter 101. Les aubes rotatives du compresseur haute pression sont fixées à un deuxième arbre rotatif de transmission s'étendant selon l'axe AX. La turbine haute pression et la turbine basse pression peuvent comporter chacune un ou plusieurs étages, chaque étage étant formé par un ensemble d'aubes fixes (ou aubage de stator) et un ensemble d'aubes rotatives (ou aubage de rotor). Les aubes fixes de la turbine haute pression sont fixées au carter 101. Les aubes rotatives de la turbine haute pression sont fixées au deuxième arbre rotatif de transmission. Les aubes fixes de la turbine basse pression sont fixées au carter 101. Les aubes rotatives de la turbine basse pression sont fixées au premier arbre rotatif de transmission.

Les aubes rotatives de la turbine basse pression entraînent les aubes rotatives du compresseur basse pression en rotation autour de l'axe AX sous l'effet de la poussée des gaz provenant de la chambre de combustion. Les aubes rotatives de la turbine haute pression entraînent les aubes rotatives du compresseur haute pression en rotation autour de l'axe sous l'effet de la poussée des gaz provenant de la chambre de combustion.

En fonctionnement, l'air s'écoule à travers la soufflante rotative 200 et une première partie FP1 (flux primaire FP1) du flux d'air est acheminée à travers le compresseur basse pression et le compresseur haute pression, dans lesquels flux primaire FP1 est comprimé et envoyé à la chambre de combustion. Les produits de combustion chauds provenant de la chambre de combustion sont utilisés pour entraîner la turbine haute pression et la turbine basse pression et produire ainsi la poussée de la turbomachine 100, et sont évacués par une tuyère 108 située à l'extrémité aval de la partie aval 107 du carter 101, située en aval de la partie amont 103 du carter 101. Le flux secondaire FS1 d'air est évacué de la soufflante rotative 200 autour du carter 101 de l'amont vers l'aval. L'aube 1 de redresseur a une forme configurée pour concentrer le flux secondaire FS1 d'air contre la surface extérieure 106 de la partie aval 107 du carter 101, située en aval de la paroi extérieure 104 de la partie amont 103 du carter 101. Un bras de fixation extérieur ou un moyen extérieur de fixation relie le carter 101 à un aéronef.

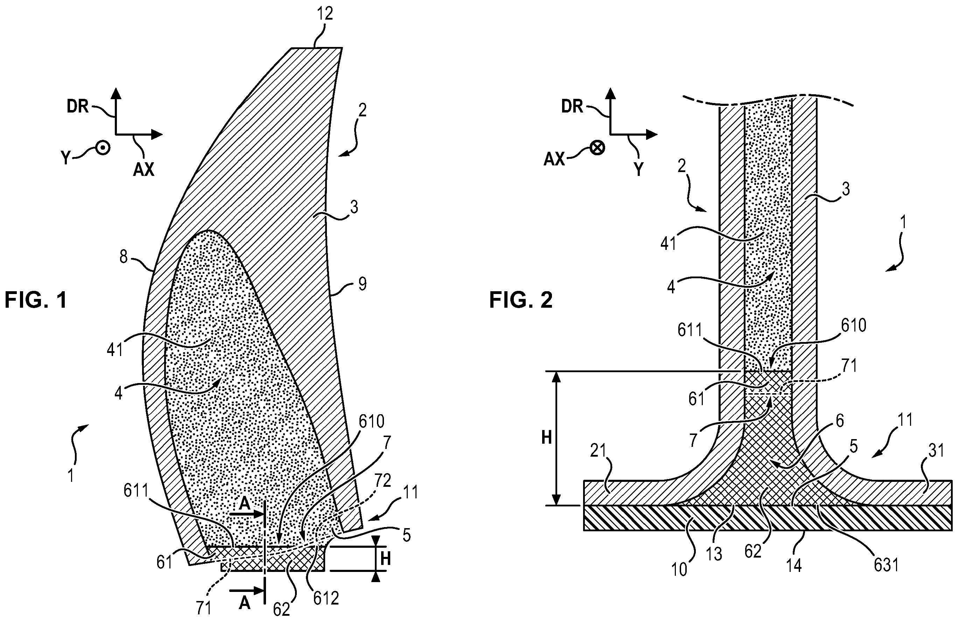

Ci-dessous, l'aube 1 de redresseur de flux secondaire de turbomachine suivant l'invention est décrite en référence aux figures 1 à 9.

L'aube 1 de redresseur de flux secondaire de turbomachine comporte une première peau extérieure 2 et une deuxième peau extérieure 3, qui sont en un premier matériau composite et qui sont raccordées l'une à l'autre. Ces peaux 2 et 3 forment la surface extérieure de l'aube 1 de redresseur, située dans le flux secondaire FS1 d'air lors du fonctionnement de la turbomachine, lorsque celle-ci est en fonctionnement, ainsi que décrit ci-dessus. La première peau extérieure 2 et la deuxième peau extérieure 3 portent le bord 8 d'attaque de l'aube 1 de redresseur, qui est son bord situé le plus en amont suivant la direction de largeur de l'aube 1, formée par la direction axiale AX. La première peau extérieure 2 et la deuxième peau extérieure 3 portent le bord 9 de fuite de l'aube 1 de redresseur, qui est son bord situé le plus en aval suivant la direction AX de largeur (ou direction AX de corde) de l'aube 1.

Dans la zone du pied 11 d'aube ou côté 11 de montage de l'aube 1 de redresseur, la première peau extérieure 2 comporte une première partie 21 d'extrémité, et la deuxième peau extérieure 3 comporte une deuxième partie d'extrémité 31 distante de la première partie 21 d'extrémité suivant la direction Y d'épaisseur. La première partie 21 d'extrémité et la deuxième partie d'extrémité 31 délimitent entre elles une ouverture 5 et s'écartent l'une de l'autre suivant la direction Y d'épaisseur, ainsi que représenté à titre d'exemple aux figures 2 à 6. La direction Y d'épaisseur est perpendiculaire à la direction AX de largeur et à la direction DR de hauteur. La direction DR de hauteur est perpendiculaire à la direction AX de largeur. La première peau extérieure 2 et la deuxième peau extérieure 3 délimitent entre elles suivant la direction Y d'épaisseur une cavité 4. La cavité 4 est située au-dessus de l'ouverture 5 et des première et deuxième partie 21, 31 d'extrémité est située suivant la direction DR de hauteur et débouche dans l'ouverture 5. Un matériau 41 de remplissage (ou pièce 41 de remplissage) est situé dans la cavité 4 contre les peaux 2 et 3 et à distance de l'ouverture 5.

Une première partie 61 d'un renfort 6 est située contre le matériau 41 de remplissage dans la cavité 4. La première partie 61 de renfort comporte une surface 610 de contact avec le matériau 41 de remplissage dans la cavité 4. La première partie 61 d'un renfort peut être située contre la première peau 2 et/ou contre la deuxième peau 3. Une deuxième partie 62 du renfort 6 bouche l'ouverture 5 entre la première partie 21 d'extrémité et la deuxième partie d'extrémité 31. Le renfort 6 a une deuxième densité supérieure à la première densité du matériau 41 de remplissage. La première partie 61 de renfort est d'une seule pièce avec la deuxième partie 62 de renfort.

Les fonctions du renfort 6 sont à la fois de combler l'ouverture 5 entre la première partie 21 d'extrémité de la peau 2 et la deuxième partie d'extrémité 31 de la peau 3 dans le pied 11 d'aube, mais aussi d'apporter une plus grande raideur en flexion que le matériau 41 de remplissage dans le pied 11 d'aube, car c'est dans cette zone que les contraintes sont les plus grandes.

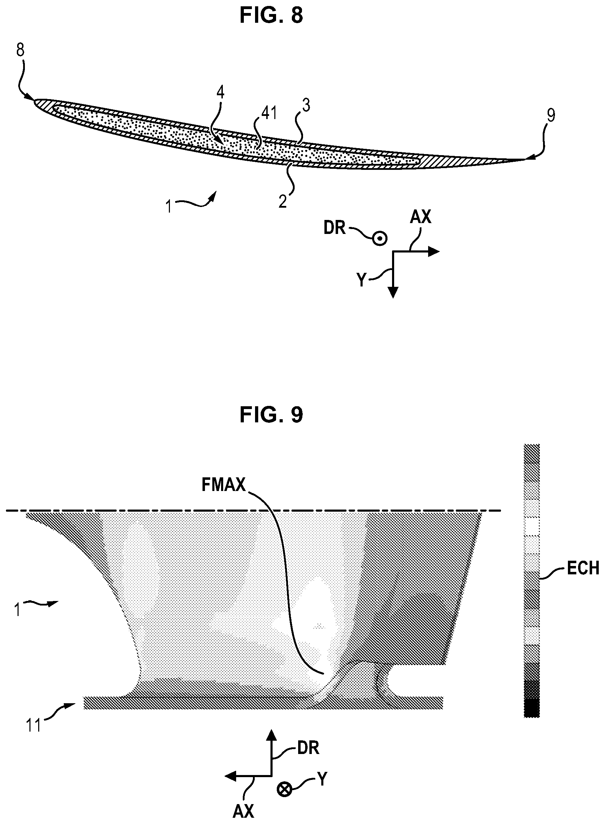

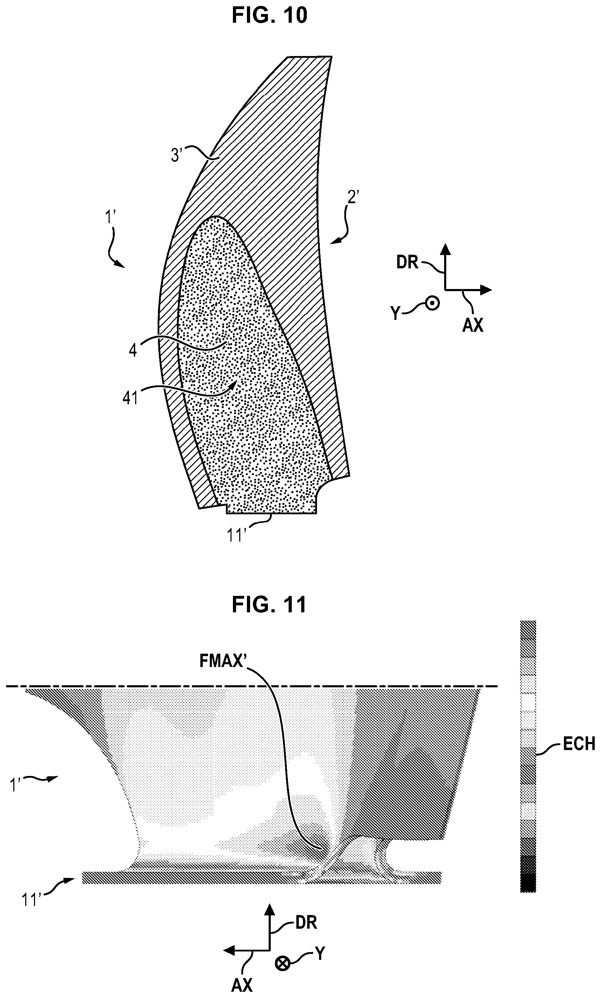

Ainsi, la figure 9 montre que les contraintes exercées en fonctionnement dans le pied 11 de l'aube 1 de redresseur sont plus petites, y compris le maximum FMAX de ces contraintes au niveau du rayon de raccordement, localisé dans ce pied 11 d'aube, que les contraintes (y compris que le maximum FMAX' de ces contraintes représentées à la figure 11) exercées en fonctionnement dans le pied 11' d'un exemple comparatif d'aube 1' de redresseur de la figure 10, ne comportant pas le renfort 6 mais uniquement les peaux 2' et 3' et le matériau 41' de remplissage dans la cavité 4. L'invention est donc un meilleur compromis raideur/masse pour améliorer la tenue mécanique comparé à l'ajout d'un longeron ou comparé à une augmentation de l'épaisseur des peaux composites. Aux figures 9 et 11, les contraintes sont représentées par des niveaux de gris rapportés à la même échelle ECH de niveaux de gris croissants.

L'invention permet de rigidifier la zone de pied de l'OGV ce qui a pour conséquence de réduire les contraintes dans les peaux composites en comparaison d'une solution dont la cavité est constituée uniquement de mousse ou munie d'un insert tel que décrit dans le document FR-A-3 063 514. L'augmentation de raideur permet également de limiter le déplacement de la tête 12 de l'aube 1 de redresseur. L'autre bénéfice de l'invention est le faible impact masse, notamment par rapport à une solution à longeron.

Suivant un mode de réalisation de l'invention, le côté 11 de montage de l'aube, la première partie 21 d'extrémité de la peau 2 et la deuxième partie d'extrémité 31 de la peau 3 sont situées sous la ligne 7 de veine aérodynamique de l'aube 1 suivant la direction DR de hauteur. La ligne 7 de veine aérodynamique forme une limite du flux secondaire FS1 de turbomachine sur la première peau extérieure 2 et sur la deuxième peau extérieure 3 et représente les points des peaux 2 et 3, qui sont les plus proches de l'axe AX central de rotation de la turbomachine 100 et qui sont dans le flux secondaire FS1. La surface 610 de contact une première partie amont 611 et une première partie aval 612, qui est située derrière la première partie amont 611 suivant la direction AX de largeur. La ligne 7 de veine aérodynamique comporte une deuxième partie amont 71 et une deuxième partie aval 72, qui est située derrière la deuxième partie amont 71 suivant la direction AX de largeur. La première partie amont 611 de la surface 610 de contact est située du côté du bord 8 d'attaque et est située suivant la direction DR de hauteur au-dessus de la deuxième partie amont 71 de la ligne 7 de veine aérodynamique, qui est située du côté du bord 8 d'attaque. Cela permet d'augmenter la raideur de l'aube 1 de redresseur, car c'est dans cette zone que sont localisées les contraintes.

Suivant un mode de réalisation de l'invention, la première partie aval 612 de la surface 610 de contact est située du côté du bord 9 de fuite et est située suivant la direction DR de hauteur au-dessous de la deuxième partie aval 72 de la ligne 7 de veine aérodynamique, qui est située du côté du bord 9 de fuite. Cela permet de davantage gagner en masse de l'aube 1 de redresseur.

Suivant un mode de réalisation de l'invention, représenté à titre d'exemple à la figure 2, la première partie amont 611 de la surface 610 de contact est située suivant la direction DR de hauteur à une hauteur H supérieure ou égale à 50 mm et inférieure ou égale à 100 mm au-dessus de l'ouverture 5.

Suivant un mode de réalisation de l'invention, la première partie amont 611 de la surface 610 de contact est située suivant la direction DR de hauteur à une hauteur supérieure ou égale à 50 mm et inférieure ou égale à 100 mm au-dessus de la deuxième partie amont 71 de la ligne 7 de veine aérodynamique.

Suivant un mode de réalisation de l'invention, le renfort 6 est en le même premier matériau composite que la première peau extérieure 2 et la deuxième peau extérieure 3.

Le premier matériau composite des peaux 2 et 3 et éventuellement du renfort 6 peut comprendre un ensemble de fibres imprégné par une matrice. La peau 2 peut être monolithique et réalisée d'une seule pièce selon un mode de réalisation non limitatif. La peau 3 peut être monolithique et réalisée d'une seule pièce, séparée de la peau 2 selon un mode de réalisation non limitatif. Le renfort 6 peut être monolithique et réalisée d'une seule pièce, séparée des peaux 2 et 3 selon un mode de réalisation non limitatif. Les fibres peuvent comprendre au moins l'un des matériaux suivants : carbone, verre, aramide, polypropylène et/ou céramique. L'ensemble de fibres peut comprendre des arrangements fibreux tissés (bidimensionnels ou tridimensionnels), tressés, tricotés ou stratifiés. La matrice comprend typiquement une matière organique (thermodurcissable, thermoplastique ou élastomère) ou une matrice en carbone. Par exemple, la matrice comprend une matière plastique, typiquement un polymère, par exemple époxyde, bismaléimide ou polyimide. L'ensemble de fibres peut être réalisé par tissage tridimensionnel sur un métier à tisser de type jacquard. Lors du tissage, des faisceaux de torons de chaine (ou torons de chaine) sont disposés en plusieurs couches. L'injection de matière plastique peut être réalisée par une technique d'injection du type RTM ou VARRTM. La matière plastique injectée est par exemple une composition liquide thermodurcissable contenant un précurseur organique du matériau de la matrice. Le précurseur organique se présente habituellement sous forme d'un polymère, tel qu'une résine, éventuellement dilué dans un solvant. De manière connue en soi, la matière plastique est chauffée de manière à provoquer une polymérisation de la matière plastique, par exemple par réticulation. Les fibres du renfort 6 peuvent être réalisées dans un matériau identique ou différent des fibres des peaux 1 et 2. Les peaux 2 et 3 peuvent être d'une seule pièce en étant réalisées de la manière indiquée ci-dessus. D'une manière préférée, les peaux 2, 3 et le renfort 6 sont en matériau composite comprenant un ensemble de fibres tissées selon tissage tridimensionnel et imprégné par une matrice.

Suivant un mode de réalisation de l'invention, le renfort 6 est en au moins un métal et en une seule pièce. Le (ou les) matériau métallique du renfort 6 peut comprendre l'un au moins des matériaux suivants : de l'acier, du titane, un alliage de titane (en particulier du TA6V, comprenant du titane, de l'aluminium, du vanadium et des traces de carbone, de fer, d'oxygène et d'azote), un superalliage à base de nickel tel que de l'Inconel, un alliage d'aluminium. La fabrication du renfort 6 métallique peut faire intervenir plusieurs procédés spécifiques comme par exemple l'usinage, la forge, le formage, la fonderie ou encore la fabrication additive (impression tridimensionnelle).

Suivant un mode de réalisation de l'invention, le renfort 6 est en un deuxième matériau composite non tissé à fibres noyées dans une matrice. Ces fibres peuvent être des fibres longues ou courtes.

Suivant un mode de réalisation de l'invention, le renfort 6 est en un matériau composite (premier ou deuxième matériau composite mentionné ci-dessus) comprenant un ensemble de fibres imprégné par une matrice, les fibres du renfort 6 étant orientées dans la direction DR de la hauteur (ou direction radiale DR ou direction DR d'envergure) de l'aube 1 de redresseur. Ainsi, le matériau du renfort 6 est structural dans la direction globalement radiale par rapport à l'axe moteur AX, pour réduire les contraintes dans les peaux composites 1 et 2.

Suivant un mode de réalisation de l'invention, le renfort 6 a un module d'Young supérieur ou égal à 5 GPa, notamment supérieur à 10 GPa, et par exemple supérieur ou égal à 15 GPa, ce module d'Young étant plus grand que celui de pièces utilisant une tresse dont les fibres sont orientées globalement dans la direction AX de corde de l'aube 1 (dans le sens Y de la largeur).

Suivant un mode de réalisation de l'invention, le matériau 41 de remplissage est plus léger que le premier matériau des peaux 2 et 3. Le matériau 41 de remplissage peut être ou comprendre une mousse, ou autres.

Suivant un mode de réalisation de l'invention, représenté aux figures 2, 5 et 6, une plaque 10 est fixée sous et contre la première partie 21 d'extrémité et la deuxième partie d'extrémité 31 et est située contre l'ouverture 5 et contre la deuxième partie 62 de renfort. La plaque 10 fait une liaison entre la première partie 21 d'extrémité et la deuxième partie d'extrémité 31.

Suivant un mode de réalisation de l'invention, représenté aux figures 2, 5 et 6, la plaque 10 comporte une surface supérieure plane 13 située sous et contre la première partie 21 d'extrémité et la deuxième partie d'extrémité 31 et est située contre l'ouverture 5 et contre la deuxième partie 62 de renfort.

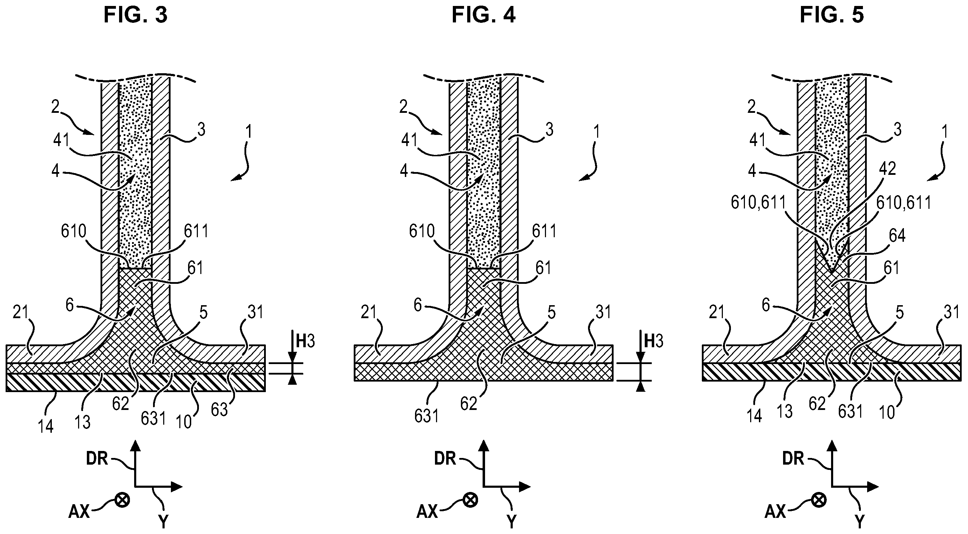

Suivant un mode de réalisation de l'invention, représenté aux figures 3 et 4, la deuxième partie 62 de renfort se prolonge en une base 63 de hauteur H3 non nulle sous la première partie 21 d'extrémité, sous la deuxième partie d'extrémité 31 et sous l'ouverture 5. Ainsi, le renfort 6 a une forme de T inversé. La surface inférieure 631 de la base 63 peut être plane.

Suivant un mode de réalisation de l'invention, représenté à la figure 3, une plaque 10 est fixée sous et contre la base 63. La plaque 10 peut comporter une surface supérieure plane 13 située sous et contre la surface inférieure plane 631 de la base 63.

Suivant un mode de réalisation de l'invention, représenté aux figures 2, 3, 5 et 6, la plaque 10 peut comporter une surface inférieure plane 14.

Suivant un mode de réalisation de l'invention, représenté aux figures 2, 3, 5 et 6, la plaque 10 peut être en un matériau différent de celui de la première partie 21 d'extrémité, de la deuxième partie d'extrémité 31 et du renfort 6 et fait une liaison entre la première partie 21 d'extrémité et la deuxième partie d'extrémité 31.

Suivant un mode de réalisation de l'invention, représenté aux figures 2, 3, 5 et 6, la plaque 10 est en un matériau composite.

Suivant un mode de réalisation de l'invention, représenté à la figure 4, la base 63 de l'aube 1 de redresseur est nue sur sa surface inférieure 631. La surface inférieure 631 peut être plane.

Suivant un mode de réalisation de l'invention, représenté à la figure 5, le matériau 41 de remplissage comporte à la surface 610 de contact une partie saillante 42, qui rentre dans une partie creuse 64 de la première partie 61 de renfort, la surface 610 de contact étant située sur la partie saillante 42 et sur la partie creuse 64. La partie saillante 42 s'étend par exemple sur toute la largeur de la cavité entre les peaux 1 et 2 suivant la direction Y. La partie creuse 64 s'étend par exemple sur toute la largeur de la cavité entre les peaux 1 et 2 suivant la direction Y. Cela permet de réaliser une transition progressive entre le matériau 41 de remplissage et le renfort 6. Cela permet d'atténuer un saut de raideur entre le matériau 41 de remplissage et le renfort 6 et évite de générer des concentrations de contraintes locales dans les peaux composites 2 et 3.

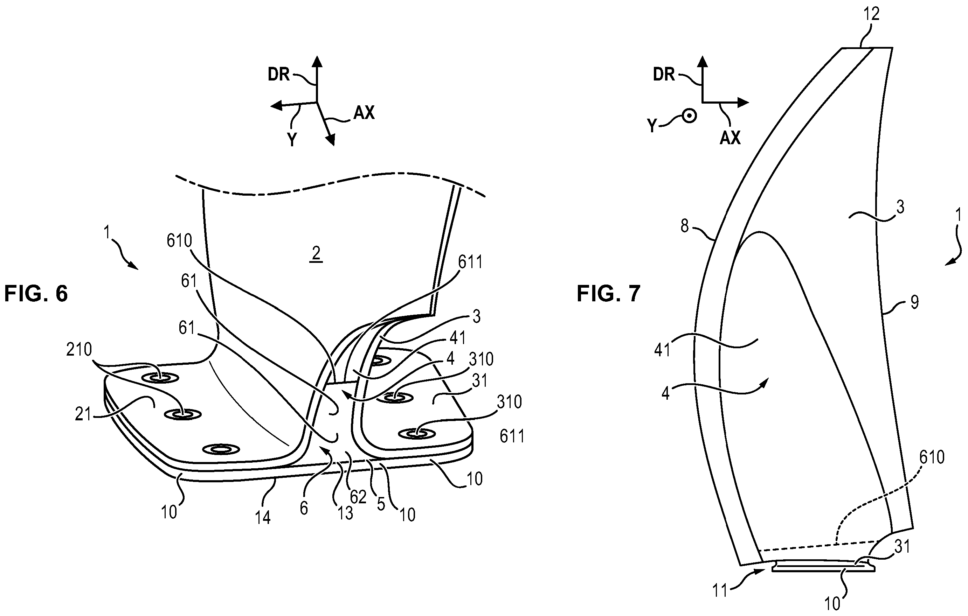

Le côté 11 de fixation, la première partie 21 d'extrémité et la deuxième partie d'extrémité 31 peuvent servir à monter ou fixer l'aube 1 de redresseur contre la surface extérieure 103 de la partie amont 103 du carter 101 de la turbomachine 100 par des moyens de montage ou de fixation, pouvant comprendre par exemple des trous traversant la première partie 21 d'extrémité et la deuxième partie d'extrémité 31, comme représenté par les trous traversants 210 et 310 dans la direction DR de hauteur à la figure 6, et pouvant comprendre des boulonnages ou rivetages dans les trous, ou autres.

## Revendications

1. Aube (1) de redresseur de flux secondaire de turbomachine, comportant une première peau extérieure (2) et une deuxième peau extérieure (3), qui sont en un premier matériau composite et qui sont raccordées l'une à l'autre,
la première peau extérieure (2) comportant une première partie (21) d'extrémité, la deuxième peau extérieure (3) comportant une deuxième partie d'extrémité (31) distante de la première partie (21) d'extrémité,
la première partie (21) d'extrémité et la deuxième partie d'extrémité (31) étant situées sur le même côté (11) de montage de l'aube (1), délimitant entre elles une ouverture (5) et s'écartant l'une de l'autre suivant une direction (Y) d'épaisseur,
l'aube (1) comportant en outre :
une cavité (4), qui est située suivant la direction (Y) d'épaisseur entre la première peau extérieure (2) et la deuxième peau extérieure (3) et qui débouche dans l'ouverture (5),
**caractérisée en ce que** l'aube comporte un matériau (41) de remplissage, qui a une première densité et qui est situé dans la cavité (4) et à distance de l'ouverture (5),
un renfort (6), qui a une deuxième densité supérieure à la première densité et qui comporte une première partie (61) de renfort située dans la cavité (4) et contre le matériau (41) de remplissage et une deuxième partie (62) de renfort, laquelle bouche l'ouverture (5) entre la première partie (21) d'extrémité et la deuxième partie d'extrémité (31),
la première partie (61) de renfort étant d'une seule pièce avec la deuxième partie (62) de renfort.

2. Aube de redresseur suivant la revendication 1, **caractérisée en ce que** la première partie (61) de renfort comporte une surface (610) de contact avec le matériau (41) de remplissage dans la cavité (4),
la première peau extérieure (2) et la deuxième peau extérieure (3) ayant un bord d'attaque (8) et un bord (9) de fuite, éloignés l'un de l'autre suivant une direction (AX) de largeur de l'aube (1), laquelle est transversale par rapport à la direction (Y) d'épaisseur,
le côté (11) de montage de l'aube (1) étant situé sous une ligne (7) de veine aérodynamique suivant une direction (DR) de hauteur de l'aube (1), transversale par rapport à la direction (Y) d'épaisseur et par rapport à la direction (AX) de largeur,
la ligne (7) de veine aérodynamique formant une limite du flux secondaire de turbomachine sur la première peau extérieure (2) et sur la deuxième peau extérieure (3),
une première partie amont (611) de la surface (610) de contact, qui est située du côté du bord d'attaque (8), est située suivant la direction (DR) de hauteur au-dessus d'une deuxième partie amont (71) de la ligne (7) de veine aérodynamique, qui est située du côté du bord d'attaque (8).

3. Aube de redresseur suivant la revendication 2, **caractérisée en ce qu'**une première partie aval (612) de la surface (610) de contact, qui est située du côté du bord (9) de fuite, est située suivant la direction (DR) de hauteur au-dessous d'une deuxième partie aval (72) de la ligne (7) de veine aérodynamique, qui est située du côté du bord (9) de fuite.

4. Aube de redresseur suivant la revendication 2 ou 3, **caractérisée en ce que** la première partie amont (611) de la surface (610) de contact est située suivant la direction (DR) de hauteur à une hauteur (H) supérieure ou égale à 50 mm et inférieure ou égale à 100 mm au-dessus de l'ouverture (5).

5. Aube de redresseur suivant l'une quelconque des revendications 2 à 4, **caractérisée en ce que** la première partie amont (611) de la surface (610) de contact est située suivant la direction (DR) de hauteur à une hauteur supérieure ou égale à 50 mm et inférieure ou égale à 100 mm au-dessus de la deuxième partie amont (71) de la ligne (7) de veine aérodynamique.

6. Aube de redresseur suivant l'une quelconque des revendications 1 à 5, **caractérisée en ce qu'**une plaque (10) fait une liaison entre la première partie (21) d'extrémité et la deuxième partie d'extrémité (31), est fixée sous et contre la première partie (21) d'extrémité et la deuxième partie d'extrémité (31) et est située contre l'ouverture (5) et contre la deuxième partie (62) de renfort.

7. Aube de redresseur suivant l'une quelconque des revendications 1 à 5, **caractérisée en ce que** la deuxième partie (62) de renfort se prolonge en une base (63) de hauteur (H3) non nulle sous la première partie (21) d'extrémité, sous la deuxième partie d'extrémité (31) et sous l'ouverture (5).

8. Aube de redresseur suivant la revendication 7, **caractérisée en ce qu'**une plaque (10) est fixée sous et contre la base (63).

9. Aube de redresseur suivant la revendication 6 ou 8, **caractérisée en ce que** la plaque (10) est en un matériau composite.

10. Aube de redresseur suivant l'une quelconque des revendications 1 à 8, **caractérisée en ce que** le renfort (6) est en le premier matériau composite.

11. Aube de redresseur suivant l'une quelconque des revendications 1 à 8, **caractérisée en ce que** le renfort (6) est en un deuxième matériau composite non tissé à fibres noyées dans une matrice.

12. Aube de redresseur suivant l'une quelconque des revendications 1 à 8, **caractérisée en ce que** le renfort (6) est en au moins un métal.

13. Aube de redresseur suivant l'une quelconque des revendications précédentes, **caractérisée en ce que** le renfort (6) a un module d'Young supérieur ou égal à 5 GPa.

14. Aube de redresseur suivant l'une quelconque des revendications 2 à 5, **caractérisée en ce que** le matériau (41) de remplissage comporte au niveau de la surface (610) de contact une partie saillante (42), qui rentre dans une partie creuse (64) de la première partie (61) de renfort.

15. Turbomachine (100) aéronautique non carénée, comportant :
un carter (101),
une soufflante (200) ayant un moyeu (201) de soufflante et des pales périphériques (202) de soufflante, solidaires du moyeu (103) de soufflante,
le moyeu (201) de soufflante ayant une partie aval (203) de moyeu, qui est entourée par une surface intérieure (102) d'une partie amont (103) du carter (101) et qui dépasse de la partie amont (103) du carter (101),
le moyeu (201) de soufflante étant monté à rotation par rapport à la partie amont (103) du carter autour d'un axe (AX) de rotation, dirigé de l'amont vers l'aval,
la turbomachine (100) comportant en outre des aubes (1) de redresseur de flux secondaire suivant l'une quelconque des revendications précédentes, lesquelles sont situées, par leur côté (11) de montage, adjacentes à une paroi extérieure (104) de la partie amont (103) du carter (101) et sont situées en aval par rapport aux pales périphériques (202) de soufflante.

## Patentansprüche

1. Turbomaschinen-Sekundärstrom-Gleichrichterschaufel (1), aufweisend eine erste Außenhaut (2) und eine zweite Außenhaut (3), die aus einem ersten Verbundwerkstoff sind und miteinander verbunden sind,
wobei die erste Außenhaut (2) einen ersten Endabschnitt (21) aufweist, wobei die zweite Außenhaut (3) einen vom ersten Endabschnitt (21) beabstandeten zweiten Endabschnitt (31) aufweist,
wobei sich der erste Endabschnitt (21) und der zweite Endabschnitt (31) auf derselben Montageseite (11) der Schaufel (1) befinden, wobei sie zwischen sich eine Öffnung (5) begrenzen und in einer Dickenrichtung (Y) voneinander abrücken,
wobei die Schaufel (1) ferner aufweist:
einen Hohlraum (4), der sich gemäß der Dickenrichtung (Y) zwischen der ersten Außenhaut (2) und der zweiten Außenhaut (3) befindet und der in die Öffnung (5) mündet,
**dadurch gekennzeichnet, dass** die Schaufel aufweist
ein Füllmaterial (41), das eine erste Dichte hat und das sich in dem Hohlraum (4) und von der Öffnung (5) in einem Abstand befindet,
eine Verstärkung (6), die eine zweite Dichte hat, die höher ist als die erste Dichte, wobei die Verstärkung (6) einen ersten Verstärkungsteil (61) aufweist, der sich in dem Hohlraum (4) und gegen das Füllmaterial (41) befindet und einen zweiten Verstärkungsteil (62), der die Öffnung (5) zwischen dem ersten Endabschnitt (21) und dem zweiten Endabschnitt (31) verschließt,
wobei der erste Verstärkungsteil (61) einstückig mit dem zweiten Verstärkungsteil (62) ausgebildet ist.

2. Gleichrichterschaufel nach Anspruch 1, **dadurch gekennzeichnet, dass** der erste Verstärkungsteil (61) eine Kontaktfläche (610) mit dem Füllmaterial (41) in dem Hohlraum (4) aufweist,
wobei die erste Außenhaut (2) und die zweite Außenhaut (3) eine Vorderkante (8) und eine Hinterkante (9) haben, die gemäß einer Breitenrichtung (AX) der Schaufel (1) voneinander entfernt sind, wobei die Breitenrichtung (AX) quer zur Dickenrichtung (Y) ist,
wobei sich die Montageseite (11) der Schaufel (1) unter einer aerodynamischen Strahlbahn (7) gemäß einer Höhenrichtung (DR) der Schaufel (1) befindet, wobei die Höhenrichtung (DR) quer zur Dickenrichtung (Y) und zur Breitenrichtung (AX) ist,
wobei die aerodynamische Strahlbahn (7) eine Grenze der Sekundärströmung der Turbomaschine auf der ersten Außenhaut (2) und auf der zweiten Außenhaut (3) bildet,
wobei sich ein erster stromaufwärtiger Teil (611) der Kontaktfläche (610), der sich auf der Seite der Vorderkante (8) befindet, gemäß der Höhenrichtung (DR) über einem zweiten stromaufwärtigen Teil (71) der aerodynamischen Strahlbahn (7) befindet, der sich auf der Seite der Vorderkante (8) befindet.

3. Gleichrichterschaufel nach Anspruch 2, **dadurch gekennzeichnet, dass** sich ein erster stromabwärtiger Teil (612) der Kontaktfläche (610), der sich auf der Seite der Hinterkante (9) befindet, gemäß der Höhenrichtung (DR) unter einem zweiten stromabwärtigen Teil (72) der aerodynamischen Strahlbahn (7) befindet, der sich auf der Seite der Hinterkante (9) befindet.

4. Gleichrichterschaufel nach Anspruch 2 oder 3, **dadurch gekennzeichnet, dass** sich der erste stromaufwärtige Teil (611) der Kontaktfläche (610) gemäß der Höhenrichtung (DR) in einer Höhe (H) von über oder gleich 50 mm und von unter oder gleich 100 mm über der Öffnung (5) befindet.

5. Gleichrichterschaufel nach einem beliebigen der Ansprüche 2 bis 4, **dadurch gekennzeichnet, dass** sich der erste stromaufwärtige Teil (611) der Kontaktfläche (610) gemäß der Höhenrichtung (DR) in einer Höhe von über oder gleich 50 mm oder von unter oder von gleich 100 mm über dem zweiten stromaufwärtigen Teil (71) der aerodynamischen Strahlbahn (7) befindet.

6. Gleichrichterschaufel nach einem beliebigen der Ansprüche 1 bis 5, **dadurch gekennzeichnet, dass** eine Platte (10) eine Verbindung zwischen dem ersten Endabschnitt (21) und dem zweiten Endabschnitt (31) herstellt, unter und gegen den ersten Endabschnitt (21) und dem zweiten Endabschnitt (31) befestigt ist und sich gegen die Öffnung (5) und gegen den zweiten Verstärkungsteil (62) befindet.

7. Gleichrichterschaufel nach einem beliebigen der Ansprüche 1 bis 5, **dadurch gekennzeichnet, dass** sich der zweite Verstärkungsteil (62) in einer Basis (63) mit einer Höhe (H3) ungleich Null unter dem ersten Endabschnitt (21), unter dem zweiten Endabschnitt (31) und unter der Öffnung (5) verlängert.

8. Gleichrichterschaufel nach Anspruch 7, **dadurch gekennzeichnet, dass** eine Platte (10) unter und gegen die Basis (63) befestigt ist.

9. Gleichrichterschaufel nach Anspruch 6 oder 8, **dadurch gekennzeichnet, dass** die Platte (10) aus einem Verbundwerkstoff ist.

10. Gleichrichterschaufel nach einem beliebigen der Ansprüche 1 bis 8, **dadurch gekennzeichnet, dass** die Verstärkung (6) aus dem ersten Verbundwerkstoff ist.

11. Gleichrichterschaufel nach einem beliebigen der Ansprüche 1 bis 8, **dadurch gekennzeichnet, dass** die Verstärkung (6) aus einem zweiten Vliesverbundwerkstoff mit Fasern ist, die in eine Matrix eingebettet sind.

12. Gleichrichterschaufel nach einem beliebigen der Ansprüche 1 bis 8, **dadurch gekennzeichnet, dass** die Verstärkung (6) aus mindestens einem Metall ist.

13. Gleichrichterschaufel nach einem beliebigen der vorstehenden Ansprüche, **dadurch gekennzeichnet, dass** die Verstärkung (6) ein Young-Modul von über oder gleich 5 GPa aufweist.

14. Gleichrichterschaufel nach einem beliebigen der Ansprüche 2 bis 5, **dadurch gekennzeichnet, dass** das Füllmaterial (41) im Bereich der Kontaktfläche (610) einen vorstehenden Teil (42) aufweist, der in einen hohlen Teil (64) des ersten Verstärkungsteils (61) hineinragt.

15. Nicht ummantelte Luftfahrt-Turbomaschine (100), aufweisend:
ein Gehäuse (101),
einen Bläser (200) mit einer Bläsernabe (201) und mit der Bläsernabe (103) fest verbundenen peripheren Bläserblättern (202),
wobei die Bläsernabe (201) einen stromabwärtigen Nabenteil (203) aufweist, der von einer Innenfläche (102) eines stromaufwärtigen Teils (103) des Gehäuses (101) umgeben ist und der über den stromaufwärtigen Teil (103) des Gehäuses (101) hinausragt,
wobei die Bläsernabe (201) relativ zum stromaufwärtigen Teil (103) des Gehäuses um eine von stromaufwärts nach stromabwärts gerichtete Drehachse (AX) drehbar gelagert ist,
wobei die Turbomaschine (100) ferner Sekundärstrom-Gleichrichterschaufeln (1) nach einem beliebigen der vorstehenden Ansprüche aufweist, die sich mit ihrer Montageseite (11) benachbart zu einer Außenwand (104) des stromaufwärtigen Teils (103) des Gehäuses (101) befinden und sich zu den peripheren Bläserblättern (202) stromabwärts befinden.

## Claims

1. A secondary flow guide vane (1) of a turbomachine, comprising a first outer skin (2) and a second outer skin (3), which are made of a first composite material and which are connected to one another,
the first outer skin (2) comprising a first end part (21), the second outer skin (3) comprising a second end part (31) distant from the first end part (21),
the first end part (21) and the second end part (31) being located on the same mounting side (11) of the vane (1), delimiting between them an opening (5) and branching away from one another along a thickness direction (Y),
the vane (1) further comprising:
a cavity (4), which is located along the thickness direction (Y) between the first outer skin (2) and the second outer skin (3) and which opens into the opening (5),
**characterized in that** the vane (1) comprises:
a filling material (41) which has a first density and which is located in the cavity (4) and at a distance from the opening (5),
a reinforcement (6), which has a second density greater than the first density and which comprises a first reinforcing part (61) located in the cavity (4) and against the filling material (41) and a second reinforcing part (62), which closes the opening (5) between the first end part (21) and the second end part (31),
the first reinforcing part (61) forming a single piece with the second reinforcing part (62).

2. The guide vane as claimed in claim 1, **characterized in that** the first reinforcing part (61) comprises a contact surface (610) for contact with the filling material (41) in the cavity (4),
the first outer skin (2) and the second outer skin (3) having a leading edge (8) and a trailing edge (9), distant from one another along a width direction (AX) of the vane (1), which is transverse with respect to the thickness direction (Y),
the mounting side (11) of the vane (1) being located under an airflow line (7) along a height direction (DR) of the vane (1), transverse with respect to the thickness direction (Y) and with respect to the width direction (AX),
the airflow line (7) forming a limit of the secondary flow of the turbomachine on the first outer skin (2) and on the second outer skin (3),
a first upstream part (611) of the contact surface (610), which is located on the side of the leading edge (8), is located along the height direction (DR) above a second upstream part (71) of the airflow line (7), which is located on the side of the leading edge (8).

3. The guide vane as claimed in claim 2, **characterized in that** a first downstream part (612) of the contact surface (610), which is located on the side of the trailing edge (9), is located along the height direction (DR) below a second downstream part (72) of the airflow line (7), which is located on the side of the trailing edge (9).

4. The guide vane as claimed in claim 2 or 3, **characterized in that** the first upstream part (611) of the contact surface (610) is located along the height direction (DR) at a height (H) greater than or equal to 50 mm and less than or equal to 100 mm above the opening (5).

5. The guide vane as claimed in any one of claims 2 to 4, **characterized in that** the first upstream part (611) of the contact surface (610) is located along the height direction (DR) at a height greater than or equal to 50 mm and less than or equal to 100 mm above the second upstream part (71) of the airflow line (7).

6. The guide vane as claimed in any one of claims 1 to 5, **characterized in that** a plate (10) makes a connection between the first end part (21) and the second end part (31), is attached under and against the first end part (21) and the second end part (31) and is located against the opening (5) and against the second reinforcing part (62).

7. The guide vane as claimed in any one of claims 1 to 5, **characterized in that** the second reinforcing part (62) extends as a base (63) of non-zero height (H3) under the first end part (21), under the second end part (31) and under the opening (5).

8. The guide vane as claimed in claim 7, **characterized in that** a plate (10) is attached under and against the base (63).

9. The guide vane as claimed in claim 6 or 8, **characterized in that** the plate (10) is made of a composite material.

10. The guide vane as claimed in any one of claims 1 to 8, **characterized in that** the reinforcement (6) is made of the first composite material.

11. The guide vane as claimed in any one of claims 1 to 8, **characterized in that** the reinforcement (6) is made of a second non-woven composite material with fibers embedded in a matrix.

12. The guide vane as claimed in any one of claims 1 to 8, **characterized in that** the reinforcement (6) is made of at least one metal.

13. The guide vane as claimed in any one of the preceding claims, **characterized in that** the reinforcement (6) has a Young modulus greater than or equal to 5 GPa.

14. The guide vane as claimed in any one of claims 2 to 5, **characterized in that** the filling material (41) comprises at the contact surface (610) a protruding part (42), which fits into a hollow part (64) of the first reinforcing part (61).

15. A aeronautical turbomachine (100) with no fairing, comprising:
a casing (101),
a fan (200) having a fan hub (201) and peripheral fan blades (202), secured to the fan hub (103),
the fan hub (201) having a downstream hub part (203), which is surrounded by an inner surface (102) of an upstream part (103) of the casing (101) and which protudes from the upstream part (103) of the casing (101),
the fan hub (201) being mounted rotatably with respect to the upstream part (103) of the casing about an axis of rotation (AX), directed from upstream to downstream,
the turbomachine (100) further comprising secondary flow guide vanes (1) as claimed in any one of the preceding claims, which are located, by their mounting side (11), adjacent to an outer wall (104) of the upstream part (103) of the casing (101) and are located downstream with respect to the peripheral fan blades (202).
